# EUROPEAN PATENT APPLICATION

(11) **EP 4 693 441 A1**
(43) Date of publication of application: **11.02.2026**
(21) Application number: 24882653.9
(22) Date of filing: 13.09.2024
(51) Int. Cl.: H01M 4/131, H01M 4/62, H01M 4/525, H01M 4/505, H01M 4/1391, H01M 10/0525, H01M 4/02

(54) **POSITIVE ELECTRODE SLURRY, MANUFACTURING METHOD OF POSITIVE ELECTRODE FOR SECONDARY BATTERY USING SAME, AND SECONDARY BATTERY COMPRISING POSITIVE ELECTRODE**

(30) Priority: 26.10.2023 KR 20230144700
(71) Applicant: LG Energy Solution, Ltd., Seoul 07335 (KR)
(72) Inventor: PARK, Jong Pil, Daejeon 34122 (KR); LEE, Youngjae, Daejeon 34122 (KR); KIM, Bongjun, Daejeon 34122 (KR); LEE, Heeyeol, Daejeon 34122 (KR); JANG, Ahreum, Daejeon 34122 (KR); KIM, Jaeyoung, Daejeon 34122 (KR)
(74) Representative: Hoffmann Eitle
(86) International application number: PCT/KR2024/014020
(87) International publication number: WO 2025/089624

(57) **Abstract**

A positive electrode slurry of the present disclosure is a positive electrode slurry for preparing a positive electrode for a lithium secondary battery, the positive electrode slurry comprising a positive electrode active material, a conductive material, a binder, an aliphatic organic acid having 5 or less carbon atoms, and a solvent, wherein the aliphatic organic acid is included in an amount of 0.02 parts by weight or more and less than 0.1 parts by weight, based on 100 parts by weight of a total solid content of the positive electrode active material, the conductive material, the binder and the aliphatic organic acid in the positive electrode slurry, and wherein the positive electrode slurry has a viscosity of 5,000 cp or more and 27,500 cp or less at room temperature.

## Description

### [TECHNICAL FIELD]

### Cross-Reference to Related Application(s)

This application claims the benefit of priority to Korean Patent Application No. 10-2023-0144700, filed on October 26, 2023, with the Korean Intellectual Property Office, the disclosure of which is incorporated herein by reference in its entirety.

The present disclosure relates to a positive electrode slurry, a preparation method of a positive electrode for a secondary battery using the same, and a secondary battery comprising the same.

### [BACKGROUND]

The use of mobile devices such as cell phones, laptops, camcorders, and digital cameras has been routinized in modern society, which accelerates the development of technologies in the fields related to the mobile devices.

Particularly, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Among such secondary batteries, lithium secondary batteries, which exhibit high energy density and operating potential, long cycle lifetime and low self-discharge rate, are commercialized and widely used.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based batteries.

A lithium secondary battery may include an electrode assembly comprising: a positive electrode and a negative electrode, which are coated with the positive electrode active material and the negative electrode active material, respectively, and a separator disposed between the positive electrode and the negative electrode. Carbon materials have been mainly used as a negative electrode active material of a lithium secondary battery, and lithium transition metal composite oxides have been used as a positive electrode active material of a lithium secondary battery. Among these materials, since lithium transition metal composite oxides containing Ni have advantages in having high working voltage and excellent capacity characteristics. However, when the content of Ni increases, the phase stability and dispersibility of the slurry deteriorate, which causes difficulties in the slurry mixing process conditions or in the slurry management.

Therefore, when applying a lithium transition metal oxide containing nickel as a positive electrode active material, a technology capable of preventing gelation of the slurry is required. In addition, it is necessary to develop a technology that can not only prevent gelation of the slurry but also minimize the risk of the process due to gelation prevention and improve the equipment maintainability.

### [DETAILED DESCRIPTION OF THE INVENTION]

### [Technical Problem]

It is an object of the present disclosure to provide a positive electrode slurry that can improve the equipment maintainability while preventing gelation of the slurry.

It is another object of the present disclosure to provide a positive electrode for a secondary battery and a secondary battery prepared by using the positive electrode slurry.

However, the technical objects to be solved by the embodiments of the present disclosure are not limited to those disclosed above, and may be expanded in various ways within the scope of the technical idea included in the present disclosure.

### [Technical Solution]

According to the present disclosure, there is provided a positive electrode slurry for preparing a positive electrode for a lithium secondary battery, the positive electrode slurry comprising a positive electrode active material, a conductive material, a binder, an aliphatic organic acid having 5 or less carbon atoms, and a solvent, wherein the aliphatic organic acid is included in an amount of 0.02 parts by weight or more and less than 0.1 parts by weight, based on 100 parts by weight of a total solid content of the positive electrode active material, the conductive material, the binder and the aliphatic organic acid in the positive electrode slurry, and wherein the positive electrode slurry has a viscosity of 5,000 cp or more and 27,500 cp or less at room temperature.

In an embodiment, the aliphatic organic acid may comprise an organic aliphatic dicarboxylic acid.

In an embodiment, the aliphatic organic acid may be included in an amount of 0.02 parts by weight or more and 0.09 parts by weight or less, based on 100 parts by weight of a total solid content of the positive electrode active material, the conductive material, the binder and the aliphatic organic acid in the positive electrode slurry.

In an embodiment, the aliphatic organic acid may be added in a solid state or in a solution state, and the aliphatic organic acid solution has a concentration of 0.4 wt.% or more and 15 wt.% or less.

In an embodiment, the positive electrode active material may include one or more lithium nickel-based oxides represented by the following Chemical Formula 1:

[Chemical Formula 1] Liₐ(NiₓMn_{y}Co_{z}A_{w})O_{2-b}X_{b}

in Chemical Formula 1,

A is at least one element selected from the group consisting of W, V, Cr, Nb, Mo, Fe, and Al, X is at least one element selected from the group consisting of P, N, F, S, and Cl, 0.95≤a≤1.2, 0≤b≤0.02, 0.8≤x<1, 0<y<0.2, 0<z<0.2, 0≤w<0.2, and x+y+z+w=1.

According to the present disclosure, there is also provided a method for preparing a positive electrode for a lithium secondary battery, the method comprising: a preparation step of preparing a positive electrode current collector; a coating step of coating the positive electrode slurry according to claim 1 onto the positive electrode current collector; and a drying step of drying the positive electrode slurry to remove the solvent.

In an embodiment, in the drying step, the aliphatic organic acid contained in the positive electrode slurry may be evaporated and removed together with the solvent.

In an embodiment, the aliphatic organic acid may include an organic aliphatic dicarboxylic acid.

In an embodiment, the aliphatic organic acid may be included in an amount of 0.02 parts by weight or more and 0.09 parts by weight or less, based on 100 parts by weight of a total solid content of the positive electrode active material, the conductive material, the binder, and the aliphatic organic acid in the positive electrode slurry.

In an embodiment, the aliphatic organic acid may be added in a solid state or in a solution state, and the aliphatic organic acid solution has a concentration of 0.4 wt.% or more and 15 wt.% or less.

The positive electrode active material may include one or more lithium nickel-based oxides represented by the following Chemical Formula 1:

[Chemical Formula 1] Liₐ(NiₓMn_{y}Co_{z}A_{w})O_{2-b}X_{b}

in Chemical Formula 1,
A is at least one element selected from the group consisting of W, V, Cr, Nb, Mo, Fe, and Al, X is at least one element selected from the group consisting of P, N, F, S, and Cl, 0.95≤a≤1.2, 0≤b≤0.02, 0.8≤x<1, 0<y<0.2, 0<z<0.2, 0≤w<0.2, and x+y+z+w=1.

According to the present disclosure, there is provided a secondary battery in which an electrode assembly structured to comprise a positive electrode, a negative electrode, and a separator interposed between the positive electrode and the negative electrode is impregnated with an electrolyte liquid.

### [Advantageous Effects]

A positive electrode slurry of the present disclosure includes oxalic acid and thus can prevent the deterioration of the phase stability of the slurry, ensure excellent processability and improve the equipment maintainability.

A method for preparing a positive electrode for a lithium secondary battery of the present disclosure limits the content of the aliphatic organic acid to a low level, and thus improve the equipment maintainability and minimize the problem of environmental pollution while preventing gelation of the positive electrode slurry.

### [BRIEF DESCRIPTION OF THE DRAWING]

FIG. 1 shows a graph evaluating the daily viscosity of the slurry of Example.
FIG. 2 shows a graph evaluating the daily viscosity of the slurry of Comparative Example.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be embodied in various different forms, and is not limited to the embodiments described herein.

Throughout the descriptions herein, when a certain part "includes" a component, this does not indicate that the certain part excludes other components, but indicates that the part may further include other components, unless otherwise defined.

In the embodiments above, expressions indicating directions such as "front," "rear," "left," "right," "up," and "down" have been used. However, these expressions are used only to facilitate the description, and may vary, for example, depending on the location of a target object or an observer.

According to an embodiment of the present disclosure, there is provided a positive electrode slurry for preparing a positive electrode for a lithium secondary battery,
the positive electrode slurry comprising a positive electrode active material, a conductive material, a binder, an aliphatic organic acid having 5 or less carbon atoms, and a solvent,
wherein the aliphatic organic acid is included in an amount of 0.02 parts by weight or more and less than 0.1 parts by weight, based on 100 parts by weight of a total solid content of the positive electrode active material, the conductive material, the binder and the aliphatic organic acid in the positive electrode slurry, and
wherein the positive electrode slurry has a viscosity of 5,000 cp or more and 27,500 cp or less at room temperature.

Here, the positive electrode active material may include one or more lithium nickel-based oxides, and specifically, one or more lithium nickel-based oxides represented by the following Chemical Formula 1:

[Chemical Formula 1] Liₐ(NiₓMn_{y}Co_{z}A_{w})O_{2-b}X_{b}

in Chemical Formula 1,
A is at least one element selected from the group consisting of W, V, Cr, Nb, Mo, Fe, and Al,
X is at least one element selected from the group consisting of P, N, F, S, and Cl,
0.95≤a≤1.2, 0≤b≤0.02, 0.6≤x≤1, 0≤y≤0.4, 0≤z≤0.4, 0≤w<0.2,and x+y+z+w=1

In other words, the positive electrode slurry may include only one material or a mixture of two or more materials thereof as a positive electrode active material, as long as it is a lithium nickel-based oxide represented by Chemical Formula 1.

Further, the positive electrode active material of the present disclosure includes a lithium nickel-based oxide containing nickel as represented by Chemical Formula 1, and thus can increase the energy density.

Meanwhile, in the case of a positive electrode slurry containing a lithium nickel-based oxide, as the nickel content increases, gelation of the slurry may be induced. In order to prevent this, the positive electrode slurry of the present disclosure includes an aliphatic organic acid, and can satisfy a viscosity of 5,000 cp or more and 27,500 cp or less at room temperature.

The aliphatic organic acid may be added to the solvent in a solid state or a solution state. When the aliphatic organic acid is added in a solution state, the aliphatic organic acid solution may have a concentration of 0.4 wt.% or more and 15 wt.% or less. That is, an aliphatic organic acid solution containing 0.4 g or more and 15 g or less of aliphatic organic acid in a powder state per 100 g of the aliphatic organic acid solution can be used.

Here, room temperature means about 25°C, and includes an error range of +/-1~2°C.

The viscosity may be measured using a B-type viscometer (BROOKFIELD AMETEK, DV2T EXTRA Touch screen viscometer), and specifically, the viscosity may be obtained by immersing the spindle of the viscometer in the positive electrode slurry and measuring the viscosity at 16 RPM for 3 minutes. In addition, the viscosity may be defined as, for example, the viscosity after the positive electrode slurry is maintained at room temperature for 6 days or more, or 7 days or more.

The aliphatic organic acid included in the positive electrode slurry of the present disclosure is an aliphatic organic acid having 5 or less carbon atoms, and specifically, may include an organic aliphatic dicarboxylic acid. For example, the aliphatic organic acid having 5 or less carbon atoms may include oxalic acid or maleic acid.

Meanwhile, the aliphatic organic acid is evaporated and removed together with the solvent during the preparation process of the positive electrode. At this time, a portion of the evaporated aliphatic organic acid may be deposited on the device, causing corrosion of the equipment and causing an adverse effect such as contamination on recovery of solvent.

Therefore, the present inventors have derived the content of an aliphatic organic acid that can prevent gelation of the positive electrode slurry while minimizing the effects of the equipment. Specifically, the content of the aliphatic organic acid may be 0.02 parts by weight or more and less than 0.1 parts by weight, based on 100 parts by weight of a total solid content of the positive electrode active material, the conductive material, the binder and the aliphatic organic acid in the positive electrode slurry, and specifically, may be 0.02 parts by weight or more and less than 0.095 parts by weight, and more specifically, 0.02 parts by weight or more and 0.09 parts by weight or less.

The positive electrode slurry containing less than 0.02 parts by weight of an aliphatic organic acid outside the above range easily causes gelation, which reduces the storage stability of the slurry and is also not preferable in terms of processability. The positive electrode slurry containing 0.1 parts by weight or more of an aliphatic organic acid exerts an effect of preventing gelation, but has problems of increasing the effect on equipment, causing the corrosion of equipment, and reducing the equipment maintainability and overall equipment effectiveness(OEE), which is not preferable.

The positive electrode slurry of the present disclosure satisfies the above content conditions and has an appropriate viscosity, thereby preventing a decrease in the phase stability of the slurry, ensuring excellent processability, and improving the equipment maintainability.

Meanwhile, the positive electrode slurry may, in addition to the lithium nickel-based oxide represented by Chemical Formula 1, further include a layered compound such as lithium cobalt oxide(LiCoO₂) and lithium nickel oxide (LiNiO₂) or a compound substituted with one or more transition metals; lithium manganese oxides such as the chemical formula Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiVO₄, V₂O₅, and Cu₂V₂O₇; a lithium manganese composite oxide represented by Chemical Formula LiMn₂₋ₓMₓO₂ (where, M = Co, Ni, Fe, Cr, Zn, or Ta, and x = 0.01~0.1) or Li₂Mn₃MO₈ (where, M = Fe, Co, Ni, Cu, or Zn); LiMn₂O₄ in which a part of Li in the chemical formula is substituted with an alkaline earth metal ion; disulfide compound; Fe₂(MoO₄)₃, a lithium metal phosphate compound represented by Chemical Formula LiFeₓMn_{y}Co_{z}PO₄ (where, x, y, z≥0, x+y+z=1), or the like. At this time, the lithium nickel-based oxide represented by Chemical Formula 1 may be included at 60 parts by weight or more based on the total weight of the active material.

In addition, the slurry may include a conductive material and a binder.

The conductive material is added in an amount of 0.1 to 30 parts by weight, specifically 0.1 to 10 parts by weight, and more specifically 0.1 to 5 parts by weight, based on the total weight of the solid component including the positive electrode active material. The conductive material is not particularly limited as long as it has electronic conductivity without causing chemical changes in the battery. Specific examples thereof include graphite such as natural graphite or artificial graphite; carbon blacks such as carbon black, acetylene black, ketjen black, channel black, furnace black, lamp black, and thermal black; conductive fibers such as carbon fibers or metal fibers; metal powders such as fluorinated carbon, aluminum, and nickel powder; conductive whiskers such as zinc oxide whiskers and potassium titanate whiskers; conductive metal oxides such as titanium oxide; or a conductive polymer such as a polyphenylene derivative.

The binder is a component assisting the binding between the active material and the conductive material and the binding of the active material to the current collector. The binder is commonly added in an amount of 1 to 30 parts by weight, specifically 1 to 10 parts by weight, and more specifically 1 to 5 parts by weight, based on the total weight of the solid component including the positive electrode active material. Examples of the binder may be polyvinylidene fluoride, polyvinyl alcohol, carboxymethyl cellulose(CMC), starch, hydroxypropyl cellulose, regenerated cellulose, polyvinylpyrrolidone, polytetrafluoroethylene, polyethylene, polypropylene, ethylenepropylene-diene terpolymer(EPDM), sulfonated EPDM, styrene butyrene rubber, fluorine rubber, various copolymers thereof, etc.

In addition to the above materials, a filler may be further included, and it may be added in an amount of 0.1 to 3 parts by weight, based on the total weight of the solid component including the positive electrode active material. The filler is selectively used as a component that suppresses expansion of the positive electrode and is not particularly limited so long as it is a fibrous material without causing chemical changes in a battery. Examples of the filler may be olefin-based polymers such as polyethylene and polypropylene; and fibrous materials such as glass fibers and carbon fibers.

Meanwhile, as a solvent for mixing these solid components, an organic solvent or an aqueous solvent can generally be used. For example, the organic solvent may include N-methyl-2-pyrrolidone (NMP), methoxy propyl acetate, butyl acetate, glycol acid, butyl ester, butyl glycol, methyl alkyl polysiloxane, alkylbenzene, propylene glycol, xylene, monophenyl glycol, aralkyl-modified methylalkylpolysiloxane, polyether-modified dimethylpolysiloxane copolymer, polyether-modified dimethyl polysiloxane copolymer, polyacrylate, alkylbenzene, diisobutyl ketone, organically modified polysiloxane, butanol, isobutanol, modified polyacrylate, modified polyurethane, and polysiloxane modified polymer, which may be preferably used alone or in a mixture of two or more thereof.

Further, as the aqueous solvent, water may be used.

According to yet another embodiment of the present disclosure, there is provided a method for preparing a positive electrode for a lithium secondary battery, the method comprising:
a preparation step of preparing a positive electrode current collector; a coating step of coating the positive electrode slurry onto the positive electrode current collector; and
a drying step of drying the positive electrode slurry to remove the solvent.

At this time, the positive electrode slurry is the above-mentioned positive electrode slurry, and specifically, includes a positive electrode active material, a conductive material, a binder, an aliphatic organic acid having 5 or less carbon atoms, and a solvent, wherein the aliphatic organic acid is included in an amount of 0.02 parts by weight or more and less than 0.1 parts by weight, based on 100 parts by weight of a total solid content of the positive electrode active material, the conductive material, the binder and the aliphatic organic acid in the positive electrode slurry, and wherein the positive electrode slurry is a positive electrode slurry having a viscosity of 5,000 cp or more and 27,500 cp or less at room temperature. Here, descriptions of the positive electrode active material, the conductive material, the binder, the aliphatic organic acid, and the solvent, the above-mentioned contents are the same as described above.

Meanwhile, in the drying step, the aliphatic organic acid contained in the positive electrode slurry is evaporated and removed together with the solvent. At this time, the evaporated aliphatic organic acid may be deposited on equipment such as the drying equipment and the process exhaust filter. In this case, the equipment maintainability such as corrosion of the equipment may be reduced, and the problem of solvent contamination may occur when the solvent is recovered. In addition, it may affect environmental pollution in the long term. The method for preparing a positive electrode for a lithium secondary battery of the present disclosure limits the content of the aliphatic organic acid to a low level, and thus can improve the equipment maintainability and minimize the problem of environmental pollution while preventing gelation of the positive electrode slurry. Specifically, as the positive electrode is prepared by using a positive electrode slurry containing 0.02 parts by weight or more and less than 0.1 parts by weight of the aliphatic organic acid, a method for preparing a positive electrode for a lithium secondary battery can be provided that can prevent gelation of the positive electrode slurry and improve the equipment maintainability.

Furthermore, according to an embodiment of the present disclosure, there is provided a secondary battery in which an electrode assembly structured to comprise a positive electrode, a negative electrode, and a separator interposed between the positive electrode and the negative electrode is impregnated with an electrolyte liquid.

In this regard, the secondary battery may be a lithium secondary battery. A method for preparing the secondary battery is widely known in the art, and therefore, description thereof is omitted herein.

Hereinafter, examples of the present disclosure will be described in detail so that those skilled in the art may easily carry out the present disclosure. The present disclosure may, however, be embodied in many different forms and is not limited to the examples set forth herein.

### Experimental Example 1: Evaluation of gelation of slurry due to inclusion of oxalic acid

### <Example 1: Preparation of slurry 1>

A positive electrode active material (Li(Ni_{0.85}Co_{0.08}Mn_{0.07})O₂), a conductive material (carbon nanotube), a binder (PVDF), and oxalic acid were mixed in a weight ratio of 95.98:1:3:0.02 under NMP to a solid content concentration of 72 wt.%.

Oxalic acid was added to the mixture so that the amount was 0.02 wt.% based the total solid content of the positive electrode active material, conductive material, binder, and oxalic acid. At this time, oxalic acid was prepared as a 0.5 wt.% solution and added.

### <Example 2: Preparation of slurry 2>

A slurry was prepared in the same manner as in Example 1, except that in Example 1, the oxalic acid solution was added in an amount of 0.024 parts by weight based on the total weight of the positive electrode active material, conductive material, binder, and oxalic acid.

### <Example 3: Preparation of slurry 3>

A slurry was prepared in the same manner as in Example 1, except that in Example 1, the oxalic acid solution was added in an amount of 0.04 parts by weight based on the total weight of the positive electrode active material, conductive material, binder, and oxalic acid.

### <Comparative Example 1: Preparation of slurry 4>

A slurry was prepared in the same manner as in Example 1, except that in Example 1, the oxalic acid solution was added in an amount of 0.015 parts by weight based on the total weight of the positive electrode active material, conductive material, binder, and oxalic acid.

### <Comparative Example 2: Preparation of slurry 5>

A slurry was prepared in the same manner as in Example 1, except that in Example 1, the oxalic acid solution was added in an amount of 0.016 parts by weight based on the total weight of the positive electrode active material, conductive material, binder, and oxalic acid.

### <Comparative Example 3: Preparation of slurry 6>

A slurry was prepared in the same manner as in Example 1, except that in Example 1, the oxalic acid solution was added in an amount of 0.018 parts by weight based on the total weight of the positive electrode active material, conductive material, binder, and oxalic acid.

### <Comparative Example 4: Preparation of slurry 7>

A slurry was prepared in the same manner as in Example 1, except that in Example 1, the oxalic acid solution was not added.

The slurries of Examples 1 to 3 and Comparative Examples 1 to 4 were left in a room temperature environment for 7 days, and then daily viscosity graphs were created.

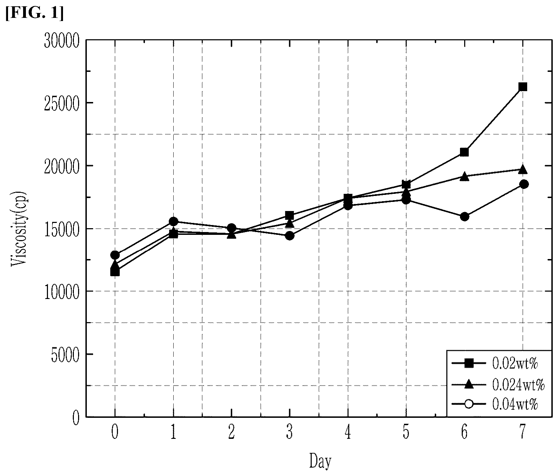

FIG. 1 shows a graph evaluating the daily viscosity of the slurry of Example.

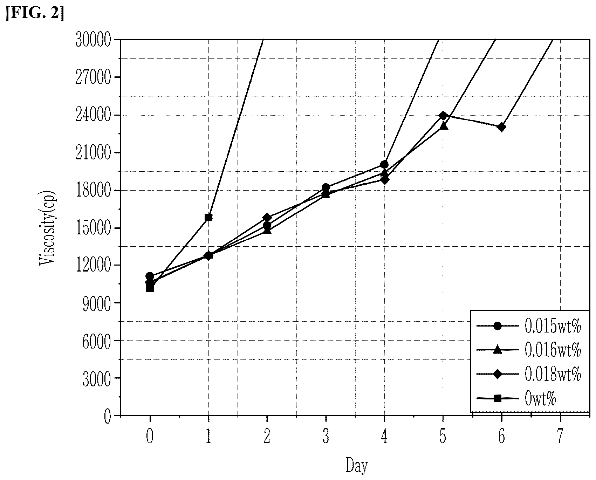

FIG. 2 shows a graph evaluating the daily viscosity of the slurry of Comparative Example.

Referring to FIG. 1, the generation of gelation was confirmed in the slurries of Examples 1 to 3 until the 7th day after preparation. In contrast, referring to FIG. 2, the slurries of Comparative Examples 1 to 3, to which oxalic acid was added in an amount of less than 0.02 parts by weight, caused gelation on the 5th, 6th, and 7th days, respectively. In addition, the slurry of Comparative Example 4, to which oxalic acid was not added, caused gelation from the 2nd day.

As a result, it was confirmed that when the positive electrode slurry contains oxalic acid, gelation is effectively prevented than when the positive electrode slurry does not contain oxalic acid. In addition, when the positive electrode slurry contains 0.02 to less than 0.1 parts by weight of oxalic acid, gelation is effectively prevented than when the positive electrode slurry contains less than 0.02 parts by weight of oxalic acid.

Therefore, the positive electrode slurry of the present disclosure contains 0.02 or more and 0.09 parts by weight or less of aliphatic organic acid, based on 100 parts by weight of a total solid content of the positive electrode active material, the conductive material, binder, and the aliphatic organic acid, and thus can prevent gelation of the slurry for a certain period of time.

### Experimental Example 2: Evaluation of the equipment maintainability of the slurry depending on whether or not oxalic acid is contained

### <Experimental Example 2-1>

When the positive electrode was prepared using the positive electrode slurry of Examples, the amount of oxalic acid detected in the AC Tower, which is an exhaust filter, was analyzed. Specifically, the amount of oxalic acid detected before and after installing an activated carbon filter in the exhaust filter was compared. As a result of the evaluation, the amount of oxalic acid detected before installing an activated carbon filter in the exhaust filter was 2 mg/kg, and the amount of oxalic acid detected after installing an activated carbon filter in the exhaust filter was 2 mg/kg, which means that the amount of oxalic acid detected in the exhaust filter before and after applying the filter was the same. That is, when the positive electrode was prepared using the positive electrode slurry of Example, it was confirmed that there was no additional oxalic acid deposited on the equipment.

### <Experimental Example 2-2>

When the positive electrode was prepared using the positive electrode slurry of Example, the amount of oxalic acid detected in the AC Tower, which is an exhaust filter, was analyzed. Specifically, the amount of oxalic acid detected before and after installing the cellulose sheet in the exhaust filter was compared. As a result of the evaluation, it was confirmed that the amount of oxalic acid detected before installing the cellulose sheet in the exhaust filter was less than 1 mg/kg, which is the limit of quantification(LOQ). It was confirmed that after installing the cellulose sheet in the exhaust filter, the amount of oxalic acid detected was less than 0.3 mg/kg, which is the limit of detection(LOD). In other words, it was confirmed that when the positive electrode was prepared using the positive electrode slurry of Example, the possibility of the occurrence of problems such as a decrease in equipment maintainability and an environmental pollution was low.

### <Experimental Example 2-3>

When the positive electrode was prepared using the positive electrode slurry of Example, the amount of oxalic acid detected inside the coater oven was analyzed. Specifically, the top and back of the coater oven were wiped with a cellulose sheet to analyze the amount of oxalic acid detected. As a result of the evaluation, it was confirmed that both the amount of oxalic acid detected in the top of the coater oven and the amount of oxalic acid detected in the back of the coater oven were lower than the limit of quantification (LOQ) of 1 mg/kg. That is, it was confirmed that when the positive electrode was prepared using the positive electrode slurry of Example, the possibility of the occurrence of problems such as a decrease in equipment maintainability and an environmental pollution was low.

That is, the positive electrode slurry according to the present disclosure contains an aliphatic organic acid in an amount of 0.02 parts by weight or more and less than 0.1 parts by weight, and has an appropriate viscosity of 5,000 cp or more and 27,500 cp or less at room temperature, which not only prevents gelation but also minimizes process risks due to gelation prevention, minimizes the effect on equipment, and improves the equipment maintainability and the overall equipment effectiveness.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

## Claims

1. A positive electrode slurry for preparing a positive electrode for a lithium secondary battery,
the positive electrode slurry comprising a positive electrode active material, a conductive material, a binder, an aliphatic organic acid having 5 or less carbon atoms, and a solvent,
wherein the aliphatic organic acid is included in an amount of 0.02 parts by weight or more and less than 0.1 parts by weight, based on 100 parts by weight of a total solid content of the positive electrode active material, the conductive material, the binder and the aliphatic organic acid in the positive electrode slurry, and
wherein the positive electrode slurry has a viscosity of 5,000 cp or more and 27,500 cp or less at room temperature.

2. The positive electrode slurry according to claim 1,
wherein the aliphatic organic acid comprises an organic aliphatic dicarboxylic acid.

3. The positive electrode slurry according to claim 1,
wherein the aliphatic organic acid is included in an amount of 0.02 parts by weight or more and 0.09 parts by weight or less, based on 100 parts by weight of a total solid content of the positive electrode active material, the conductive material, the binder and the aliphatic organic acid in the positive electrode slurry.

4. The positive electrode slurry according to claim 1,
wherein the aliphatic organic acid is added in a solid state or in a solution state, and the aliphatic organic acid solution has a concentration of 0.4 wt.% or more and 15 wt.% or less.

5. The positive electrode slurry according to claim 1,
wherein the positive electrode active material includes one or more lithium nickel-based oxides represented by the following Chemical Formula 1:
[Chemical Formula 1] Liₐ(NiₓMn_{y}Co_{z}A_{w})O_{2-b}X_{b}
in Chemical Formula 1,
A is at least one element selected from the group consisting of W, V, Cr, Nb, Mo, Fe, and Al, X is at least one element selected from the group consisting of P, N, F, S, and Cl, 0.95≤a≤1.2, 0≤b≤0.02, 0.8≤x<1, 0<y<0.2, 0<z<0.2, 0≤w<0.2, and x+y+z+w=1.

6. A method for preparing a positive electrode for a lithium secondary battery, the method comprising:
a preparation step of preparing a positive electrode current collector;
a coating step of coating the positive electrode slurry according to claim 1 onto the positive electrode current collector; and
a drying step of drying the positive electrode slurry to remove the solvent.

7. The method for preparing a positive electrode for a lithium secondary battery according to claim 6,
wherein in the drying step, the aliphatic organic acid contained in the positive electrode slurry is evaporated and removed together with the solvent.

8. The method for preparing a positive electrode for a lithium secondary battery according to claim 6,
wherein the aliphatic organic acid includes an organic aliphatic dicarboxylic acid.

9. The method for preparing a positive electrode for a lithium secondary battery according to claim 6,
wherein the aliphatic organic acid is included in an amount of 0.02 parts by weight or more and 0.09 parts by weight or less, based on 100 parts by weight of a total solid content of the positive electrode active material, the conductive material, the binder, and the aliphatic organic acid in the positive electrode slurry.

10. The method for preparing a positive electrode for a lithium secondary battery according to claim 6,
wherein the aliphatic organic acid is added in a solid state or in a solution state, and the aliphatic organic acid solution has a concentration of 0.4 wt.% or more and 15 wt.% or less.

11. The method for preparing a positive electrode for a lithium secondary battery according to claim 6,
wherein the positive electrode active material includes one or more lithium nickel-based oxides represented by the following Chemical Formula 1:
[Chemical Formula 1] Liₐ(NiₓMn_{y}Co_{z}A_{w})O_{2-b}X_{b}
in Chemical Formula 1,
A is at least one element selected from the group consisting of W, V, Cr, Nb, Mo, Fe, and Al, X is at least one element selected from the group consisting of P, N, F, S, and Cl, 0.95≤a≤1.2, 0≤b≤0.02, 0.8≤x<1, 0<y<0.2, 0<z<0.2, 0≤w<0.2, and x+y+z+w=1.

12. A secondary battery in which an electrode assembly structured to comprise the positive electrode prepared according to claim 6, a negative electrode, and a separator interposed between the positive electrode and the negative electrode is impregnated with an electrolyte liquid.
